# EUROPEAN PATENT SPECIFICATION

(11) **EP 3 487 217 B1**
(45) Date of publication and mention of the grant of the patent: **04.12.2019**
(21) Application number: 17202638.7
(22) Date of filing: 20.11.2017
(51) Int. Cl.: H04W 36/00, H04W 64/00, H04W 16/00, H04W 76/11, H04W 76/00

(54) **CORE NETWORK OF A MOBILE RADIO COMMUNICATION NETWORK**
KERNNETZ EINES MOBILFUNK-KOMMUNIKATIONSNETZES
RÉSEAU CENTRAL D'UN RÉSEAU DE COMMUNICATION RADIO MOBILE

(43) Date of publication of application: 22.05.2019
(73) Proprietor: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); MUTIKAINEN, Jari, 80687 Munich (DE); GUERZONI, Riccardo, 80687 Munich (DE); MINOKUCHI, Atsushi, 80687 Munich (DE)
(74) Representative: Viering, Jentschura & Partner mbB Patent- und Rechtsanwälte

(56) References cited:
- WO-A1-2017/078776
- ZTE: "23.502 P-CR Discussion and proposal on EBI management, exhaustion and relocation", 3GPP DRAFT; S2-177112 23.502 P-CR DISCUSSION AND PROPOSAL ON EBI MANAGEMENT, EXHAUSTION AND RELOCATION, 3RD GENERATION PARTNERSHIP PROJECT (3GPP), MOBILE COMPETENCE CENTRE ; 650, ROUTE DES LUCIOLES ; , vol. SA WG2, no. Ljubljana, Slovenia; 20171023 - 20171027 22 October 2017 (2017-10-22), XP051347068, Retrieved from the Internet: URL:http://www.3gpp.org/ftp/Meetings_3GPP_ SYNC/SA2/Docs/ [retrieved on 2017-10-22]
- ERICSSON: "Allocation of EPS bearer ID in 5GS", 3GPP DRAFT; S2-174196, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20170626 - 20170630 25 June 2017 (2017-06-25), XP051303051, Retrieved from the Internet: URL:http://www.3gpp.org/ftp/Meetings_3GPP_ SYNC/SA2/Docs/ [retrieved on 2017-06-25]
- NTT DOCOMO INTEL: "Comparison of solutions for EBI allocation", 3GPP DRAFT; S2-175742 EBI COMPARISON 122BIS R3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. ;20090219 21 August 2017 (2017-08-21), XP051325591, Retrieved from the Internet: URL:http://www.3gpp.org/ftp/Meetings_3GPP_ SYNC/SA2/Docs/ [retrieved on 2017-08-21]
- INTEL ET AL: "23.502: QoS mapping for 5GC-EPC interworking", 3GPP DRAFT; S2-175892_WAS4554_23502_IWK_QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, France; 20170821 - 20170825 21 August 2017 (2017-08-21), XP051325738, Retrieved from the Internet: URL:http://www.3gpp.org/ftp/Meetings_3GPP_ SYNC/SA2/Docs/ [retrieved on 2017-08-21]
- NTT DOCOMO: "EPS bearer ID allocation update", 3GPP DRAFT; S2-180708 CORRECTIONS OF EBI ALLOCATION_R5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Gothenburg, Sweden; 20180122 - 20180126 16 January 2018 (2018-01-16), XP051390119, Retrieved from the Internet: URL:http://www.3gpp.org/tsg_sa/WG2_Arch/TS GS2_125_Gothenburg/Docs/S2-180708 corrections of EBI allocation_r5.doc [retrieved on 2018-01-16]

## Description

### Technical Field

Various aspects of this disclosure relate generally to a core network of a mobile radio communication network.

### Background

When establishing a new communication service (e.g. a new communication session) in accordance with a first communication network, a component of the first communication network assigns an identifier i.e. Evolved Packet System (EPS) Bearer Identifier (ID) (EBI) for second communication network that will be used in case of handover to a second communication network. In a second communication network, the number of EBIs is limited to 8 per mobile terminal, so that it could happen that the number of communication sessions is higher than number of available EBIs in the second communication network. The first communication network therefore needs to decide to which communication session the available EBIs are assigned.

ZTE: "23.502 P-CR Discussion and proposal on EBI management, exhaustion and relocation", 3GPP DRAFT; S2-177112 23.502 P-CR DISCUSSION AND PROPOSAL ON EBI MANAGEMENT, EXHAUSTION AND RELOCATION, vol. SA WG2, no. Ljubljana, Slovenia; 20171023 - 20171027; 22 October 2017 (2017-10-22), discloses two alternatives. A first alternative is to ask the UE to release one EBI; the second alternative is to ask the SMF to release the EBI without UE involvement. Neither of the two alternatives involves any subscription for the Evolved Packet System Bearer Identifier availability notification.

ERICSSON: "Allocation of EPS bearer ID in 5GS", 3GPP DRAFT; S2-174196, vol. SA WG2, no. San Jose Del cabo, Mexico; 20170626 -20170630 25 June 2017 (2017-06-25), discloses prioritizing connections so that connections with lower priority are stopped in favor of connections with higher priority. None of the alterantives proposed involves any subscription for the Evolved Packet System Bearer Identifier availability notification.

NTT DOCOMO INTEL: "Comparison of so/utions for EBI allocation", 3GPP DRAFT; S2-175742 EBI COMPARISON 122BIS R3, vol. SA WG2; 20090219; 21 August 2017 (2017-08-21), discloses tradeoffs between making the EPS allocation on the UE or in the AMF. The proposed method includes preventing the UE to generate extra QoS connections when the number is exceeded, and withdrawal of EBI connections. Furthermore, in this case, there is no mention of any mechanism for the Evolved Packet System Bearer Identifier availability

### Summary

A method of establishing a communication service, the method including: a first network function in a first communication network of a mobile radio communication network determining that the communication service requires an Identifier for service interworking with a second communication network; the first network function in the first communication network requesting an Identifier from second network function in the first communication network of the mobile radio communication network; and the second network function determining whether the requested Identifier for service interworking with the second communication network is available for the communication service and, in case the requested Identifier is not available, providing an information to the first network function in the first communication network that the request is rejected;

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a message sequence diagram illustrating various messages provided to establish, in other words generate, an EBI parameter of a communication connection in a first communication network during PDU session establishment.
FIG. 2 shows a message sequence diagram 200 illustrating an exemplary EBI assignment based on slice based prioritization.
FIG. 3 shows a message sequence diagram 300 illustrating an exemplary EBI assignment based on DNN based prioritization.
FIG. 4 shows a message sequence diagram 400 illustrating an exemplary subscription for EBI availability.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

In a mobile radio communication network in which various generations of various communication networks, e.g. mobile radio communication networks, coexist, a radio communication terminal device such as e.g. a User Equipment (UE) (also referred to as a mobile phone), or one or a plurality of components within the device that are connected to the mobile radio communication network including connected vehicles, and devices in the Internet of Things, may have to switch radio communication technology dynamically from one mobile radio communication network (e.g. first communication network) to another mobile radio communication network (e.g. second communication network), in which the two mobile radio communication networks are based on two different mobile radio communication network generations, such as e.g. 5G mobile radio communication technology or 4G mobile radio communication technology, without any communication service disruption for the mobile user.

This requirement highlights the need for compatibility mechanisms that allow UEs to move seamlessly between different mobile radio communication technologies.

An embodiment of such generation switch may occurr e.g. when a UE changes connectivity from a 5G radio communication network to a 4G radio communication network. In the 5G radio communication network, a UE may maintain one or more communication service (also referred to as communication sessions) than in a 4G radio communication network. Upon switching from a 5G radio communication network to a 4G radio communication network, one or more communication service(s) of the UE may continue to function, while other service(s) will be dropped or suspended.

To control whether a communication service may continue, at the time of creation of a new communication connection (in other words a new communication session) in 5G, a component of the core network of the 5G radio communication network needs to assign an identifier(e.g. an Evolved Packet System (EPS) Bearer Identifier (ID) (EBI) and forward to the UE. 4G radio communication network identifier that may be used in case of handover of a communication session to the 4G Evolved Packet Core (EPC). The EBI parameter is a signal to inform the UE and/or 4G radio communication core network, in other words the EPC, whether the communication connection needs to be maintained open or whether it should be closed. Ultimately, the EBI status indicates whether the new communication connection has a continuity property when the UE moves from a 5G radio communication network to a 4G radio communication network.

Furthermore, in accordance with a 4G radio communication standard, the number of concurrent EBI connections allowed is limited to 8 while no such constraint exists in a 5G radio communication standard. Therefore, at the time of generation of a new 5G Quality of Service (QoS) Flow which results in a Packet Data Unit (PDU) communication session, in other words of a new communication session in the 5G-based mobile radio communication network, care should be taken that the number of EBI connections allowed does not exceed the 4G limit of 8.

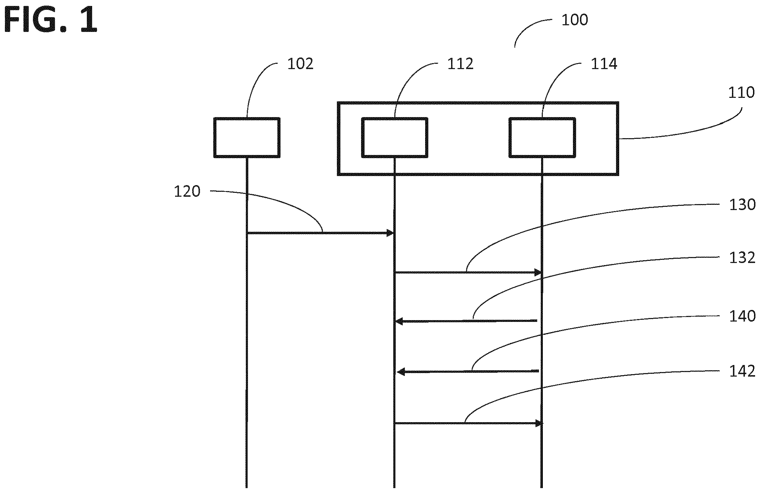

FIG. 1 shows a message sequence diagram 100 illustrating various messages provided to establish, in other words generate, an EBI parameter of a communication connection in a 5G radio communication network during a Quality of Service (QoS) Flow communication session establishment in accordance with the mobile radio communication standard 3GPP TS 23.502 titled "Procedures for the 5G System", Version V1.5.0.

Various components which are involved in the communication session initiation may be a mobile terminal, such as a UE 102, and a 5G communication core network 110 which include an Access and Mobility Management Functions (AMF) component 112, and at least one Session Management Functions (SMF(s)) component 114.

The UE 102 may include any processor, circuit or component or module provided for mobile radio communication according to any desired mobile radio communication technology such as a 3G mobile radio communication technology, 4G mobile radio communication technology or even 5G mobile radio communication technology. By way of example, the UE 102 may include one or more antennas, one or more Radio Frequency (RF) Frontend circuits including e.g. one or a plurality of amplifiers such as e.g. one or a plurality of power amplifiers (PAs), one or a plurality of low noise amplifiers (LNAs). The UE 102 may further include one or a plurality of baseband circuits provided for baseband processing of the received signals or the signals to be transmitted. Furthermore, the UE 102 may include one or a plurality of application processors for higher level signal processing or the provision of application programs. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The UE 102 may generate a PDU communication session establishment request message 120 and may transmit the same to a component in the 5G communication core network 110 responsible for the PDU communication session establishment such as e.g. the AMF 112. Upon receiving the PDU communication session establishment request message 120, the AMF 112 generates a PDU communication session creation request message 130 and it transmits the PDU communication session establishment request message 130 to another component of the 5G communication core network such as e.g. the SMF 114.

The SMF 114, upon receiving the PDU communication session creation request message 130, makes a determination about the EBI status of the PDU communication session and then issues a PDU Create Context Response message 132 directed to the AMF 112 and a Communication EBI assignment message 140 i.e. to request for EBI allcoation for a UE.

Upon receiving the Communication EBI assignment message 140, the AMF 112 can assign an EBI parameter for service interworking in the EPC and the AMF 112 sends the allcoated EBI(s) in an EBI assignment response message 142 to the SMF 114.

The EBI assignment response message 142 depends on whether the constraint of a maximum of 8 EBI communication connections per communication service has been violated or not.

When the EBI communication connections limit has not been violated, in various embodiments, the EBI assignment response message 142 by the AMF 112 may include at least one message field in its message header portion or an information encoded in the payload of the message 142 a Quality of Service (QoS) Flow Identification (ID) corresponding to the PDU session established and one or more EBI(s) that have been created for the UE 102.

When instead the EBI connections limit has been violated, in various embodiments, the EBI assignment response message 142 by the AMF may include at least one message field in the message header portion or an information encoded in the payload of the message indicating a rejection, which may be indicated by the exemplary value Reject EBI Request, at least one cause of rejection that in some embodiments may indicate the violation of the max number of EBI communication connections allocated, and it may indicate at least one delay in the form of a back-off timer. The delay being a delay that the AMF 112 may impose to the PGW-C+SMF 113 before accepting any EBI request for a specified UE 102.a delay (e.g. back-off timer) that the AMF 112 may impose to the SMF 113 before accepting (or requesting) any EBI request for a specified UE 102.

In some embodiments the delay function may be a timer and in other implementations it may be a back-off timer.

In some embodiments the EBI assignment response message 142 by the AMF may include a rejection or an ARP (Allocation and Retention Priority) list, or at least one of a Domain Network Name (DNN) or a Single Network Slice Selection Assistance Information (S-NSSAI).

In some embodiments, the delay may depend on a priority table which specifies which QoS Flows are to be preferred to others.

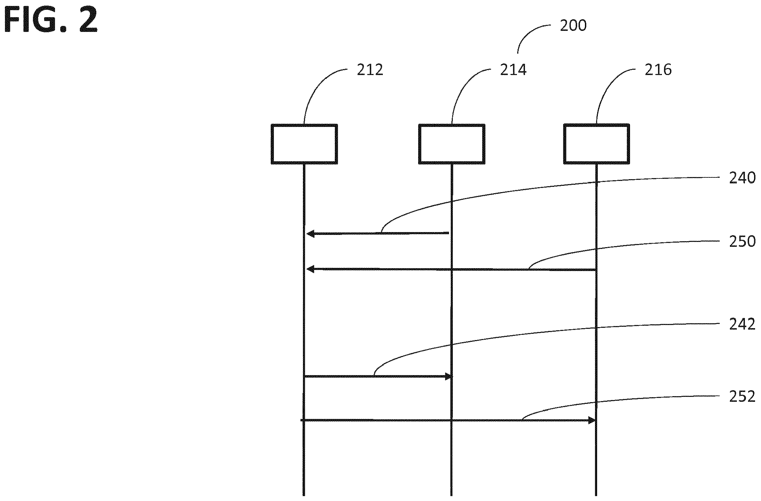

FIG. 2 shows a message sequence diagram 200 illustrating an exemplary EBI assignment based on slice based prioritization.

Various components which are involved in the communication session initiation may be at least one Access and Mobility Management Functions (AMF) component 212, at least one Packet Data Network of the Control Plane (PGW-C) and/or Session Management Functions (SMF) component (PGW-C+SMF#1) 214, and at least one Packet Data Network of the Control Plane (PGW-C) and/or Session Management Functions (SMF) component (PGW-C+SMF#1) 216.

The PGW-C+SMF#1 214 tansmits a Communication EBI assignment message 240 to the AMF 212 including at least one message field in the message header portion or an information encoded in the payload of the message 240 indicating at least one PDU Seesion ID, at least one ARP list, at least one DNN indicating an exemplary value DNN#1 and at least one S-NSSAI indicating an exemplary value S-NSSAI#1.

The PGW-C+SMF#2 216 tansmits a Communication EBI assignment message 250 to the AMF 212 including at least one message field in the message header portion or an information encoded in the payload of the message 250 indicating at least one PDU Seesion ID, at least one ARP list, at least one DNN indicating an exemplary value DNN#1 and at least one S-NSSAI indicating an exemplary value S-NSSAI#2.

The AMF 212 upon receiving the messages 240 and 250 matches the S-NSSAIs in the exemplary messages 240 and 250 with respect to an exemplary priority list.

When, illustratively, the priorty list indicates that S-NSSAI#2 has higher priority than S-NSSAI#1, the AMF 221 grants the EBI request from PGW-C+SMF#2, while the AMF rejects the EBI request from PGW-C+SMF#1.

The AMF 212 therefore transmits to PGW-C+SMF#1 216 a rejecting message 242, where the message may include least one message field in the message header portion or an information encoded in the payload of the message 242 indicating a rejection, which may be indicated by the exemplary value Reject EBI Request, at least one cause of rejection that in some embodiments may indicate the violation of the max number of EBI communication connections allocated, and it may indicate at least one delay in the form of a back-off timer.

The AMF 212 therefore transmits to PGW-C+SMF#2 214 a granting message 252, where the message may include at least one message field in its message header portion or an information encoded in the payload of the message 242 a Quality of Service (QoS) Flow Identification (ID) corresponding to the PDU session established and the list of EBIs.

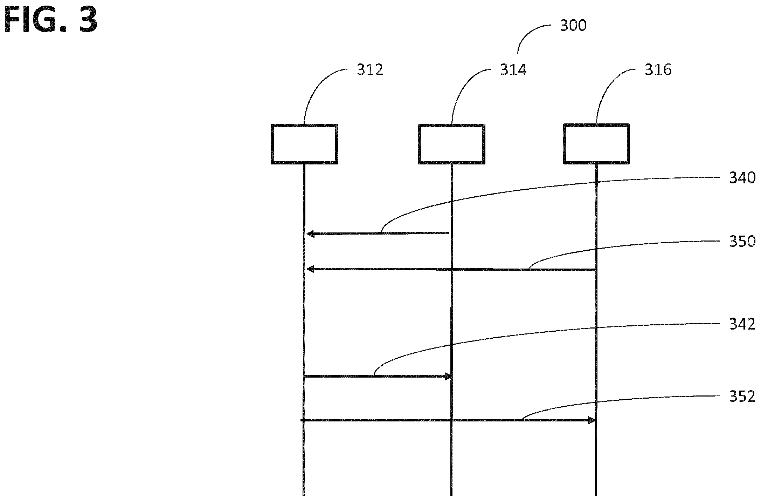

FIG. 3 shows a message sequence diagram 300 illustrating an exemplary EBI assignment based on DNN based prioritization.

Various components which are involved in the communication session initiation may be at least one Access and Mobility Management Functions (AMF) component 312, at least one Packet Data Network of the Control Plane (PGW-C) and/or Session Management Functions (SMF) component (PGW-C+SMF#1) 314, and at least one Packet Data Network of the Control Plane (PGW-C) and/or Session Management Functions (SMF) component (PGW-C+SMF#1) 316.

The PGW-C+SMF#1 314 tansmits a Communication EBI assignment message 340 to the AMF 312 including at least one message field in the message header portion or an information encoded in the payload of the message 340 indicating at least one PDU Seesion ID, at least one ARP list, at least one DNN indicating an exemplary value DNN#1.

The PGW-C+SMF#2 316 tansmits a Communication EBI assignment message 350 to the AMF 312 including at least one message field in the message header portion or an information encoded in the payload of the message 350 indicating at least one PDU Seesion ID, at least one ARP list, at least one DNN indicating an exemplary value DNN#2.

The AMF 312 upon receiving the messages 340 and 350 matches the DNNs in the exemplary messages 340 and 350 with respect to an exemplary priority list.

When, illustratively, the priorty list indicates that DNN#2 has higher priority than DNN#1, the AMF 312 grants the EBI request from PGW-C+SMF#2 316, while the AMF rejects the EBI request from PGW-C+SMF#1 314.

The AMF 312 transmits to PGW-C+SMF#1 314 a rejecting message 342, where the message may include least one message field in the message header portion or an information encoded in the payload of the message 342 indicating a rejection, which may be indicated by the exemplary value Reject EBI Request, at least one cause of rejection that in some embodiments may indicate the violation of the max number of EBI communication connections allocated, and it may indicate at least one delay in the form of a back-off timer.

The AMF 312 transmits to PGW-C+SMF#2 316 a granting message 352, where the message may include at least one message field in its message header portion or an information encoded in the payload of the message 342 a Quality of Service (QoS) Flow Identification (ID) corresponding to the PDU session established and the list of EBIs.

In some embodiments, the priority table may be based on the radio communication network slices in which the QoS flow may be created. Examples of such priorities may include the AMF 112 may prioritize QoS flows based on Single Network Slice Selection Assistance Information (S-NSSAI), or the AMF 112 may prioritize QoS flows based on Domain Network Names of the communication connections, or the AMF 112 may prioritize communication connections based on a number of UE 102 subscription, or the AMF 112 may prioritize communication connections based on the UE 102 location.

In some embodiments the EBI allocation based on a subscription process whereby the SMF 114 subscribes towards the AMF 112 to be informed when a new EBI communication service become available in a respective communication session or for a UE.

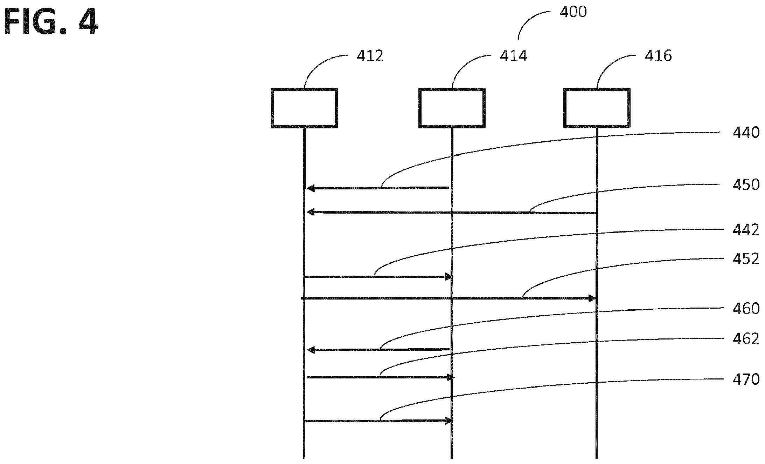

FIG. 4 shows a message sequence diagram 400 illustrating an exemplary subscription for EBI availability.

Various components which are involved in the communication session initiation may be at least one Access and Mobility Management Functions (AMF) component 412, at least one Packet Data Network of the Control Plane (PGW-C) and/or Session Management Functions (SMF) component (PGW-C+SMF#1) 414, and at least one Packet Data Network of the Control Plane (PGW-C) and/or Session Management Functions (SMF) component (PGW-C+SMF#1) 416.

The PGW-C+SMF#1 414 tansmits a Communication EBI assignment message 440 to the AMF 412 including at least one message field in the message header portion or an information encoded in the payload of the message 440 indicating at least one PDU Seesion ID, at least one ARP list, at least one DNN and at least one S-NSSAI indicating an exemplary value S-NSSAI #1.

The PGW-C+SMF#2 416 tansmits a Communication EBI assignment message 450 to the AMF 412 including at least one message field in the message header portion or an information encoded in the payload of the message 450 indicating at least one PDU Seesion ID, at least one ARP list, at least one DNN and at least one S-NSSAI indicating an exemplary value S-NSSAI #2.

The AMF 412 upon receiving the messages 440 and 450 matches the S-NNAIs in the exemplary messages 440 and 450 with respect to an exemplary priority list.

When, illustratively, the priorty list indicates that S-NSSAI #2 has higher priority than S-NSSAI #1, the AMF 412 grants the EBI request from PGW-C+SMF#2 416, while the AMF rejects the EBI request from PGW-C+SMF#1 414.

The AMF 412 transmits to PGW-C+SMF#1 414 a rejecting message 442, where the message may include least one message field in the message header portion or an information encoded in the payload of the message 442 indicating a rejection, which may be indicated by the exemplary value Reject EBI Request, at least one cause of rejection that in some embodiments may indicate the violation of the max number of EBI communication connections allocated, and it may indicate at least one delay in the form of a back-off timer.

The AMF 412 transmits to PGW-C+SMF#2 416 a granting message 452, where the message may include at least one message field in its message header portion or an information encoded in the payload of the message 442 a Quality of Service (QoS) Flow Identification (ID) corresponding to the PDU session established and the list of EBIs.

Upon receiving message 452 the PGW-C+SMF#1 414 transmits to the AMS 412 an EBI Assignment Response message 460, where the message may include at least one message field in its message header portion or an information encoded in the payload of the message 460 a UI identity whose exemplary value may be SUP.

Upon receiving the message 460 the AMF transmits message 462, where the message may include at least one message field in its message header portion or an information encoded in the payload of the message 460 a ACK.

When an EBI is free, the AMF may transmit an EBI available Notification 470 to the PGW-C+SMF#1, where the message may include at least one message field in its message header portion or an information encoded in the payload of the message 460 a ACK.

The PGW-C+SMF#1 414 may transmits a Communication EBI assignment message 440 to the AMF 412 including at least one message field in the message header portion or an information encoded in the payload of the message 440 indicating at least one PDU Seesion ID, at least one ARP list, at least one DNN and at least one S-NNAI indicating an exemplary value S-NNAI#1.

In the following, various examples are provided with reference to the aspects described above.
Example 1 is a method of establishing a communication service. The method may include a network function in a first communication network determining that the communication service requires an Identifier for service interworking with a second communication network, the first network function in the first communication network requesting an Identifier from second network function in the first communication network of the mobile radio communication network, and the second network function determining whether the requested Identifier for service interworking with the second communication network is available for the communication service and, in case the requested Identifier is not available, providing an information to the first network function in the first communication network that the request is rejected.
In Example 2, the subject matter of Example 1 can optionally include that the first network function in the first communication network subscribes for an Identifier for service interworking with the second communication network availability notification with the second network in the first communication network.
In Example 3, the subject matter of any one of Examples 1 or 2 can optionally include that the first network function in the first communication network is a Session Managing Function; and/or that the second network function in the first communication is a Access and Mobility Management Function
In Example 4, the subject matter of any one of Examples 1 to 3 can optionally include that the Identifier for service interworking with the second communication network is an Evolved Packet System Bearer Identifier for a service interworking with the Evolved Packet Core network.
In Example 5, the subject matter of any one of Examples 1 to 4 can optionally include that the method further includes receiving a message by the first network function to establish a Quality of Service Flow session.
In Example 6, the subject matter of any one of Examples 1 to 5 can optionally include that the second network function provides a delay request to the first network function to delay any subsequent request from the first network function to set the Identifier of a mobile terminal.
In Example 7, the subject matter of Example 6 can optionally include that the delay is determined by means of a back-off timer.
In Example 8, the subject matter of any one of Examples 6 or 7 can optionally include that the length of the delay depends on a priority of the communication service.
In Example 9, the subject matter of any one of Examples 6 to 8 can optionally include that the length of the delay depends on the type of a radio communication network slice in which the communication service is established.
In Example 10, the subject matter of any one of Examples 8 or 9 can optionally include that the priority of the communication service depends on a priority table which specifies which Quality of Service communication Flows are to be preferred;
In Example 11, the subject matter of Example 10 can optionally include that the priority table is managed by a Mobile Network Operator;
In Example 12, the subject matter of any one of Examples 10 or 11 can optionally include that the priorities in the priority table are based on the radio communication network slices in which the Quality of Service communication flow are created, wherein the priorities are preferably based on Single Network Slice Selection Assistance Information and/or on Domain Network Names of the communication connections, and/or on the radio communication terminal device subscription, and/or on the radio communication terminal device location.
In Example 13, the subject matter of Example 2 can optionally include that the first network function subscribes towards the second network function to be informed when a new Identifier connection becomes available.
In Example 14, the subject matter of any one of Examples 1 to 13 can optionally include that the first network function requests the Identifier only after the expiration of the delay.
Example 15 is a method of establishing a communication session. The method may include a second network function in a second communication network receiving from a first network function in a first communication network a request to establish an identifier connection from second network function in the first communication network of the mobile radio communication network, the second network function determining whether the requested Identifier is available for the communication service and, in case the requested Identifier is not available, providing an information to the first network function that the request is rejected.
In Example 16, the subject matter of Example 15 can optionally include that the first network function in the first communication network subscribes for an Identifier for service interworking with the second communication network availability notification with the second network in the first communication network.
In Example 17, the subject matter of any one of Examples 15 or 16 can optionally include that the first network function in the first communication network is a Session Managing Function, and/or that the second network function in the first communication is a Access and Mobility Management Function.
In Example 18, the subject matter of any one of Examples 15 to 17 can optionally include that the Identifier for service interworking with the second communication network is an Evolved Packet System Bearer Identifier for a service interworking with the Evolved Packet Core network.
In Example 19, the subject matter of any one of Examples 15 to 18 can optionally include that the method further includes receiving a message by the first network function to establish a Quality of Service Flow session.
In Example 20, the subject matter of any one of Examples 15 to 19 can optionally include that the second network function provides a delay request to the first network function to delay any subsequent request from the first network function to set the Identifier of a mobile terminal.
In Example 21, the subject matter of Example 20 can optionally include that the delay is determined by means of a back-off timer.
In Example 22, the subject matter of any one of Examples 20 or 21 can optionally include that the length of the delay depends on a priority of the communication service.
In Example 23, the subject matter of any one of Examples 20 to 22 can optionally include that the length of the delay depends on the type of a radio communication network slice in which the communication service is established.
In Example 24 , the subject matter of any one of Examples 22 or 23 can optionally include that the priority of the communication service depends on a priority table which specifies which Quality of Service communication Flows are to be preferred;
In Example 25, the subject matter of Example 24 can optionally include that the priority table is managed by a Mobile Network Operator.
In Example 26, the subject matter of any one of Examples 24 or 25 can optionally include that the priorities in the priority table are based on the radio communication network slices in which the Quality of Service communication flow are created, wherein the priorities are preferably based on Single Network Slice Selection Assistance Information and/or on Domain Network Names of the communication connections, and/or on the radio communication terminal device subscription, and/or on the radio communication terminal device location.
In Example 27, the subject matter of Example 16 can optionally include that the first network function component subscribes towards the second network function to be informed when a new Identifier connection becomes available.
In Example 28, the subject matter of any one of Examples 15 to 27 can optionally include that the first network function requests the Identifier only after the expiration of the delay.
Example 29 is an arrangement for establishing a communication service. The arrangement may include a network function in a first communication network configured to determine that the communication service requires an Identifier for service interworking with a second communication network, the first network function in the first communication network further configured to request an Identifier from second network function in the first communication network of the mobile radio communication network, and the second network function configured to determine whether the requested Identifier for service interworking with the second communication network is available for the communication service and, in case the requested Identifier is not available, and to provide an information to the first network function in the first communication network that the request is rejected.
In Example 30, the subject matter of Example 29 can optionally include that the first network function in the first communication network is further configured to subscribe for an Identifier for service interworking with the second communication network availability notification with the second network in the first communication network.
In Example 31, the subject matter of any one of Examples 29 or 30 can optionally include that the first network function in the first communication network includes or is configured as a Session Managing Function, and/or that the second network function in the first communication includes or is configured as a Access and Mobility Management Function.
In Example 32, the subject matter of any one of Examples 29 to 31 can optionally include that the Identifier for service interworking with the second communication network is an Evolved Packet System Bearer Identifier for a service interworking with the Evolved Packet Core network.
In Example 33, the subject matter of any one of Examples 29 to 32 can optionally include that the arrangement further includes a receiver configured to receive a message by the first network function to establish a Quality of Service Flow session.
In Example 34, the subject matter of any one of Examples 29 to 33 can optionally include that the second network function is configured to provide a delay request to the first network function to delay any subsequent request from the first network function to set the Identifier of a mobile terminal.
In Example 35, the subject matter of Example 34 can optionally include that the arrangement further includes a back-off timer configured to provide the delay.
In Example 36, the subject matter of any one of Examples 34 or 35 can optionally include that the length of the delay depends on a priority of the communication service.
In Example 37, the subject matter of any one of Examples 34 to 36 can optionally include that the length of the delay depends on the type of a radio communication network slice in which the communication service is established.
In Example 38, the subject matter of any one of Examples 36 or 37 can optionally include that the priority of the communication service depends on a priority table which specifies which Quality of Service communication Flows are to be preferred;
In Example 39, the subject matter of Example 38 can optionally include that the priority table is managed by a Mobile Network Operator.
In Example 40, the subject matter of any one of Examples 38 or 39 can optionally include that the priorities in the priority table are based on the radio communication network slices in which the Quality of Service communication flow are created, wherein the priorities are preferably based on Single Network Slice Selection Assistance Information and/or on Domain Network Names of the communication connections, and/or on the radio communication terminal device subscription, and/or on the radio communication terminal device location.
In Example 41, the subject matter of Example 40 can optionally include that the first network function is configured to subscribe towards the second network function to be informed when a new Identifier connection becomes available.
In Example 42, the subject matter of any one of Examples 29 to 41 can optionally include that the first network function is configured to request the Identifier only after the expiration of the delay.
Example 43 is an arrangement for establishing a communication session. The arrangement may include a second network function in a second communication network configured to receive from a first network function in a first communication network a request to establish an identifier connection from second network function in the first communication network of the mobile radio communication network, the second network function configured to determine whether the requested Identifier is available for the communication service and, in case the requested Identifier is not available, to provide an information to the first network function that the request is rejected.
In Example 44, the subject matter of Example 43 can optionally include that the first network function in the first communication network is configured to subscribe for an Identifier for service interworking with the second communication network availability notification with the second network in the first communication network.
In Example 45, the subject matter of any one of Examples 43 or 44 can optionally include that the first network function in the first communication network includes or is configured as a Session Managing Function; and/or that the second network function in the first communication includes or is configured as an Access and Mobility Management Function.
In Example 46, the subject matter of any one of Examples 43 to 45 can optionally include that the Identifier for service interworking with the second communication network is an Evolved Packet System Bearer Identifier for a service interworking with the Evolved Packet Core network.
In Example 47, the subject matter of any one of Examples 43 to 46 can optionally include that the arrangement further includes a receiver configured to receive a message by the first network function to establish a Quality of Service Flow session.
In Example 48, the subject matter of any one of Examples 43 to 47 can optionally include that the second network function is configured to provide a delay request to the first network function to delay any subsequent request from the first network function to set the Identifier of a mobile terminal.
In Example 49, the subject matter of Example 48 can optionally include that the arrangement further includes a back-off timer configured to provide the delay.
In Example 50, the subject matter of any one of Examples 48 or 49 can optionally include that the length of the delay depends on a priority of the communication service.
In Example 51, the subject matter of any one of Examples 48 to 50 can optionally include that the length of the delay depends on the type of a radio communication network slice in which the communication service is established.
In Example 52, the subject matter of any one of Examples 50 or 51 can optionally include that the priority of the communication service depends on a priority table which specifies which Quality of Service communication Flows are to be preferred;
In Example 53, the subject matter of Example 52 can optionally include that the priority table is managed by a Mobile Network Operator.
In Example 54, the subject matter of any one of Examples 52 or 53 can optionally include that the priorities in the priority table are based on the radio communication network slices in which the Quality of Service communication flow are created, wherein the priorities are preferably based on Single Network Slice Selection Assistance Information and/or on Domain Network Names of the communication connections, and/or on the radio communication terminal device subscription, and/or on the radio communication terminal device location.
In Example 55, the subject matter of Example 44 can optionally include that the first network function component subscribes towards the second network function to be informed when a new Identifier connection becomes available.
In Example 56, the subject matter of any one of Examples 43 to 55 can optionally include that the first network function requests the Identifier only after the expiration of the delay.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims.

## Claims

1. A method of establishing a communication service, the method comprising:
a first network function in a first communication network of a mobile radio communication network determining that the communication service requires an Identifier for service interworking with a second communication network;
the first network function in the first communication network requesting an Identifier from a second network function in the first communication network of the mobile radio communication network; and
the second network function determining whether the requested Identifier for service interworking with the second communication network is available for the communication service and, in case the requested Identifier is not available, providing an information to the first network function in the first communication network that the request is rejected;
wherein the first network function in the first communication network subscribes for the Identifier for service interworking with the second communication network availability notification with the second network function in the first communication network;
wherein the first network function in the first communication network is a Session Managing Function (114), and/or
wherein the second network function in the first communication is an Access and Mobility Management Function (112);
wherein the Identifier for service interworking with the second communication network is an Evolved Packet System Bearer Identifier for a service interworking with the Evolved Packet Core network.

2. The method of claim 1, further comprising:
receiving a message by the first network function to establish a Quality of Service Flow session.

3. The method of any one of claims 1 to 2,
wherein the second network function provides a delay request to the first network function to delay any subsequent request from the first network function to set the Identifier of a mobile terminal.

4. The method of any one of claims 1 to 3,
wherein the second network function determining a priority value for the requested Identifier for service interworking;
wherein in case a plurality of network functions requests the Identifier for service interworking with the second communication network, in case at least one of the requested Identifiers is not available the second network function providing an information to at least one of the plurality of network functions that the request is rejected;
wherein the second network function selecting the at least one of the plurality of network functions requesting the Identifier for service interworking with the second communication network associated with the lowest priority value.

5. A method of establishing a communication service, the method comprising:
a second network function in a first communication network of a mobile radio communication network receiving from a first network function in a first communication network a request to establish an Identifier connection from second network function in the first communication network of the mobile radio communication network; and
the second network function (312) determining whether the requested Identifier is available for the communication service and, in case the requested Identifier is not available, providing an information to the first network function that the request is rejected;
wherein the first network function in the first communication network subscribes for an Identifier for service interworking with the second communication network availability notification with the second network function in the first communication network;
wherein the first network function in the first communication network is a Session Managing Function (114), and/or
wherein the second network function in the first communication is an Access and Mobility Management Function (112);
wherein the Identifier for service interworking with the second communication network is an Evolved Packet System Bearer Identifier for a service interworking with the Evolved Packet Core network.

6. An arrangement for establishing a communication service, the arrangement comprising:
a first network function in a first communication network of a mobile radio communication network configured to determine that the communication service requires an Identifier for service interworking with a second communication network;
the first network function in the first communication network further configured to request an Identifier from a second network function in the first communication network of the mobile radio communication network; and
the second network function configured to determine whether the requested Identifier for service interworking with the second communication network is available for the communication service and, in case the requested Identifier is not available, and to provide an information to the first network function in the first communication network that the request is rejected;
wherein the first network function in the first communication network is further configured to subscribe for an Identifier for service interworking with the second communication network availability notification with the second network function in the first communication network;
wherein the first network function in the first communication network comprises or is configured as a Session Managing Function (114), and/or
wherein the second network function in the first communication comprises or is configured as an Access and Mobility Management Function (112);
wherein the Identifier for service interworking with the second communication network is an Evolved Packet System Bearer Identifier for a service interworking with the Evolved Packet Core network.

7. An arrangement for establishing a communication service, the arrangement comprising:
a second network function in a first communication network configured to receive from a first network function in a first communication network a request to establish an Identifier;
the second network function configured to determine whether the requested Identifier is available for the communication service and, in case the requested Identifier is not available, to provide an information to the first network function that the request is rejected;
wherein the first network function in the first communication network subscribes for an Identifier for service interworking with the second communication network availability notification with the second network function in the first communication network;
wherein the first network function in the first communication network is a Session Managing Function (114), and/or
wherein the second network function in the first communication is an Access and Mobility Management Function (112);
wherein the Identifier for service interworking with the second communication network is an Evolved Packet System Bearer Identifier for a service interworking with the Evolved Packet Core network.

## Patentansprüche

1. Verfahren zum Aufbauen eines Kommunikationsdienstes, das Verfahren aufweisend:
eine erste Netzwerkfunktion in einem ersten Kommunikationsnetz eines Mobilfunk-Kommunikationsnetzes ermittelt, dass der Kommunikationsdienst eine Kennung zur Dienstzusammenarbeit mit einem zweiten Kommunikationsnetz erfordert;
die erste Netzwerkfunktion in dem ersten Kommunikationsnetz fordert eine Kennung von einer zweiten Netzwerkfunktion in dem ersten Kommunikationsnetz des Mobilfunk-Kommunikationsnetzes an; und
die zweite Netzwerkfunktion ermittelt, ob die angeforderte Kennung zur Dienstzusammenarbeit mit dem zweiten Kommunikationsnetz für den Kommunikationsdienst verfügbar ist und stellt, in dem Fall, dass die angeforderte Kennung nicht verfügbar ist, eine Information an die erste Netzwerkfunktion in dem ersten Kommunikationsnetz bereit, dass die Anforderung abgelehnt ist;
wobei die erste Netzwerkfunktion in dem ersten Kommunikationsnetz eine Verfügbarkeitsbenachrichtigung der Kennung zur Dienstzusammenarbeit mit dem zweiten Kommunikationsnetz von der zweiten Netzwerkfunktion in dem ersten Kommunikationsnetz abonniert;
wobei die erste Netzwerkfunktion in dem ersten Kommunikationsnetz eine Sitzungsverwaltungsfunktion (114) ist, und/oder
wobei die zweite Netzwerkfunktion in dem ersten Kommunikationsnetz eine Zugangs- und Mobilitätsverwaltungsfunktion (112) ist;
wobei die Kennung zur Dienstzusammenarbeit mit dem zweiten Kommunikationsnetz eine Evolved-Packet-System-Trägerkennung für eine Dienstzusammenarbeit mit dem Evolved-Packet-Kernnetz ist.

2. Verfahren nach Anspruch 1, ferner aufweisend:
Empfangen einer Nachricht durch die erste Netzwerkfunktion, um eine Qualityof-Service-Flow-Sitzung herzustellen.

3. Verfahren nach einem der Ansprüche 1 oder 2,
wobei die zweite Netzwerkfunktion eine Verzögerungsanforderung an die erste Netzwerkfunktion bereitstellt, um jede darauffolgende Anforderung von der ersten Netzwerkfunktion, um die Kennung eines mobilen Endgerätes festzulegen, zu verzögern.

4. Verfahren nach einem der Ansprüche 1 bis 3,
wobei die zweite Netzwerkfunktion einen Prioritätswert für die angeforderte Kennung zur Dienstzusammenarbeit ermittelt;
wobei in dem Fall, dass mehrere Netzwerkfunktionen die Kennung zur Dienstzusammenarbeit mit dem zweiten Kommunikationsnetz anfordern, und in dem Fall, dass zumindest eine der angeforderten Kennungen nicht verfügbar ist, die zweite Netzwerkfunktion eine Information an zumindest eine der mehreren Netzwerkfunktionen bereitstellt, dass die Anforderung abgelehnt ist;
wobei die zweite Netzwerkfunktion die zumindest eine der mehreren Netzwerkfunktionen, die die Kennung zur Dienstzusammenarbeit mit dem zweiten Kommunikationsnetz anfordern, auswählt, der der niedrigste Prioritätswert zugeordnet ist.

5. Verfahren zum Aufbauen eines Kommunikationsdienstes, das Verfahren aufweisend:
eine zweite Netzwerkfunktion in einem ersten Kommunikationsnetz eines Mobilfunk-Kommunikationsnetzes empfängt von einer ersten Netzwerkfunktion in einem ersten Kommunikationsnetz eine Anforderung, um eine Kennungs-Verbindung von einer zweiten Netzwerkfunktion in dem ersten Kommunikationsnetz des Mobilfunk-Kommunikationsnetzes herzustellen; und
die zweite Netzwerkfunktion (312) ermittelt, ob die angeforderte Kennung für den Kommunikationsdienst verfügbar ist und stellt, in dem Fall, dass die angeforderte Kennung nicht verfügbar ist, eine Information an die erste Netzwerkfunktion bereit, dass die Anforderung abgelehnt ist;
wobei die erste Netzwerkfunktion in dem ersten Kommunikationsnetz eine Verfügbarkeitsbenachrichtigung der Kennung zur Dienstzusammenarbeit mit dem zweiten Kommunikationsnetz von der zweiten Netzwerkfunktion in dem ersten Kommunikationsnetz abonniert;
wobei die erste Netzwerkfunktion in dem ersten Kommunikationsnetz eine Sitzungsverwaltungsfunktion (114) ist, und/oder
wobei die zweite Netzwerkfunktion in dem ersten Kommunikationsnetz eine Zugangs- und Mobilitätsverwaltungsfunktion (112) ist;
wobei die Kennung zur Dienstzusammenarbeit mit dem zweiten Kommunikationsnetz eine Evolved-Packet-System-Trägerkennung für eine Dienstzusammenarbeit mit dem Evolved-Packet-Kernnetz ist.

6. Eine Anordnung zum Aufbauen eines Kommunikationsdienstes, die Anordnung aufweisend:
eine erste Netzwerkfunktion in einem ersten Kommunikationsnetz eines Mobilfunk-Kommunikationsnetzes, die eingerichtet ist, zu ermitteln, dass der Kommunikationsdienst eine Kennung zur Dienstzusammenarbeit mit einem zweiten Kommunikationsnetz erfordert;
die erste Netzwerkfunktion in dem ersten Kommunikationsnetz ist ferner eingerichtet, eine Kennung von einer zweiten Netzwerkfunktion in dem ersten Kommunikationsnetz des Mobilfunk-Kommunikationsnetzes anzufordern; und
die zweite Netzwerkfunktion ist eingerichtet, um zu ermitteln, ob die angeforderte Kennung zur Dienstzusammenarbeit mit dem zweiten Kommunikationsnetz für den Kommunikationsdienst verfügbar ist, und um, in dem Fall, dass die angeforderte Kennung nicht verfügbar ist, eine Information an die erste Netzwerkfunktion in dem ersten Kommunikationsnetz bereitzustellen, dass die Anforderung abgelehnt ist;
wobei die erste Netzwerkfunktion in dem ersten Kommunikationsnetz ferner eingerichtet ist, eine Verfügbarkeitsbenachrichtigung der Kennung zur Dienstzusammenarbeit mit dem zweiten Kommunikationsnetz mit der zweiten Netzwerkfunktion in dem ersten Kommunikationsnetz zu abonnieren;
wobei die erste Netzwerkfunktion in dem ersten Kommunikationsnetz eine Sitzungsverwaltungsfunktion (114) aufweist oder als solche eingerichtet ist, und/oder
wobei die zweite Netzwerkfunktion in dem ersten Kommunikationsnetz eine Zugangs- und Mobilitätsverwaltungsfunktion (112) aufweist oder als solche eingerichtet ist;
wobei die Kennung zur Dienstzusammenarbeit mit dem zweiten Kommunikationsnetz eine Evolved-Packet-System-Trägerkennung für eine Dienstzusammenarbeit mit dem Evolved-Packet-Kernnetz ist.

7. Eine Anordnung zum Aufbauen eines Kommunikationsdienstes, die Anordnung aufweisend:
eine zweite Netzwerkfunktion in einem ersten Kommunikationsnetz, die eingerichtet ist, um von einer ersten Netzwerkfunktion in einem ersten Kommunikationsnetz eine Anforderung, eine Kennung herzustellen, zu empfangen; und
die zweite Netzwerkfunktion ist eingerichtet, zu ermitteln, ob die angeforderte Kennung für den Kommunikationsdienst verfügbar ist und um, in dem Fall, dass die angeforderte Kennung nicht verfügbar ist, eine Information an die erste Netzwerkfunktion in dem ersten Kommunikationsnetz bereitzustellen, dass die Anforderung abgelehnt ist;
wobei die erste Netzwerkfunktion in dem ersten Kommunikationsnetz eine Verfügbarkeitsbenachrichtigung der Kennung zur Dienstzusammenarbeit mit dem zweiten Kommunikationsnetz von der zweiten Netzwerkfunktion in dem ersten Kommunikationsnetz abonniert;
wobei die erste Netzwerkfunktion in dem ersten Kommunikationsnetz eine Sitzungsverwaltungsfunktion (114) ist, und/oder
wobei die zweite Netzwerkfunktion in dem ersten Kommunikationsnetz eine Zugangs- und Mobilitätsverwaltungsfunktion (112) ist;
wobei die Kennung zur Dienstzusammenarbeit mit dem zweiten Kommunikationsnetz eine Evolved-Packet-System-Trägerkennung für eine Dienstzusammenarbeit mit dem Evolved-Packet-Kernnetz ist.

## Revendications

1. Procédé d'établissement d'un service de communication, le procédé comprenant les étapes ci-dessous dans lesquelles :
une première fonction de réseau dans un premier réseau de communication d'un réseau de communication radio mobile détermine que le service de communication nécessite un identificateur pour un interfonctionnement de service avec un second réseau de communication ;
la première fonction de réseau dans le premier réseau de communication demande un identificateur, à une seconde fonction de réseau dans le premier réseau de communication du réseau de communication radio mobile ; et
la seconde fonction de réseau détermine si l'identificateur demandé pour l'interfonctionnement de service avec le second réseau de communication est disponible pour le service de communication et, dans le cas où l'identificateur demandé n'est pas disponible, fournit des informations à la première fonction de réseau dans le premier réseau de communication, indiquant que la demande est rejetée ;
dans lequel la première fonction de réseau dans le premier réseau de communication souscrit à l'identificateur pour l'interfonctionnement de service au moyen de la notification de disponibilité du second réseau de communication avec la seconde fonction de réseau dans le premier réseau de communication ;
dans lequel la première fonction de réseau dans le premier réseau de communication est une fonction de gestion de session (114) ; et/ou dans lequel la seconde fonction de réseau dans le premier réseau de communication est une fonction de gestion d'accès et de mobilité (112) ;
dans lequel l'identificateur pour l'interfonctionnement de service avec le second réseau de communication est un identificateur de porteuse de système par paquets évolué pour un interfonctionnement de service avec le réseau central par paquets évolué.

2. Procédé selon la revendication 1, comprenant en outre l'étape ci-dessous consistant à :
recevoir un message, par le biais de la première fonction de réseau, visant à établir une session de flux de qualité de service.

3. Procédé selon l'une quelconque des revendications 1 à 2,
dans lequel la seconde fonction de réseau fournit une demande de retard, à la première fonction de réseau, pour retarder toute demande subséquente, en provenance de la première fonction de réseau, visant à définir l'identificateur d'un terminal mobile.

4. Procédé selon l'une quelconque des revendications 1 à 3,
dans lequel la seconde fonction de réseau détermine une valeur de priorité pour l'identificateur demandé pour l'interfonctionnement de service ;
dans lequel, dans le cas où une pluralité de fonctions de réseau demande l'identificateur pour l'interfonctionnement de service avec le second réseau de communication, dans le cas où au moins l'un des identificateurs demandés n'est pas disponible, la seconde fonction de réseau fournit des informations à au moins l'une de la pluralité de fonctions de réseau, indiquant que la demande est rejetée ; dans lequel la seconde fonction de réseau sélectionne ladite au moins une fonction de la pluralité de fonctions de réseau demandant l'identificateur pour l'interfonctionnement de service avec le second réseau de communication associé à la valeur de priorité la plus faible.

5. Procédé d'établissement d'un service de communication, le procédé comprenant les étapes ci-dessous dans lesquelles :
une seconde fonction de réseau dans un premier réseau de communication d'un réseau de communication radio mobile reçoit, en provenance d'une première fonction de réseau dans un premier réseau de communication, une demande visant à établir une connexion d'identificateur à partir d'une seconde fonction de réseau dans le premier réseau de communication du réseau de communication radio mobile ; et
la seconde fonction de réseau (312) détermine si l'identificateur demandé est disponible pour le service de communication et, dans le cas où l'identificateur demandé n'est pas disponible, fournit des informations, à la première fonction de réseau, indiquant que la demande est rejetée ;
dans lequel la première fonction de réseau dans le premier réseau de communication souscrit à un identificateur pour l'interfonctionnement de service au moyen d'une notification de disponibilité du second réseau de communication avec la seconde fonction de réseau dans le premier réseau de communication ;
dans lequel la première fonction de réseau dans le premier réseau de communication est une fonction de gestion de session (114) ; et/ou dans lequel la seconde fonction de réseau dans le premier réseau de communication est une fonction de gestion d'accès et de mobilité (112) ;
dans lequel l'identificateur pour l'interfonctionnement de service avec le second réseau de communication est un identificateur de porteuse de système par paquets évolué pour un interfonctionnement de service avec le réseau central par paquets évolué.

6. Agencement destiné à établir un service de communication, l'agencement comprenant :
une première fonction de réseau dans un premier réseau de communication d'un réseau de communication radio mobile, configurée de manière à déterminer que le service de communication nécessite un identificateur en vue d'un interfonctionnement de service avec un second réseau de communication ;
la première fonction de réseau dans le premier réseau de communication étant en outre configurée de manière à demander un identificateur, à une seconde fonction de réseau dans le premier réseau de communication du réseau de communication radio mobile ; et
la seconde fonction de réseau étant configurée de manière à déterminer si l'identificateur demandé pour l'interfonctionnement de service avec le second réseau de communication est disponible pour le service de communication et, dans le cas où l'identificateur demandé n'est pas disponible, à fournir des informations à la première fonction de réseau dans le premier réseau de communication, indiquant que la demande est rejetée ;
dans lequel la première fonction de réseau dans le premier réseau de communication est en outre configurée de manière à souscrire à un identificateur pour l'interfonctionnement de service au moyen de la notification de disponibilité du second réseau de communication avec la seconde fonction de réseau dans le premier réseau de communication ;
dans lequel la première fonction de réseau dans le premier réseau de communication comprend ou est configurée en tant qu'une fonction de gestion de session (114) ; et/ou
dans lequel la seconde fonction de réseau dans le premier réseau de communication comprend ou est configurée en tant qu'une fonction de gestion d'accès et de mobilité (112) ;
dans lequel l'identificateur pour l'interfonctionnement de service avec le second réseau de communication est un identificateur de porteuse de système par paquets évolué pour un interfonctionnement de service avec le réseau central par paquets évolué.

7. Agencement destiné à établir un service de communication, l'agencement comprenant :
une seconde fonction de réseau dans un premier réseau de communication, configurée de manière à recevoir, en provenance d'une première fonction de réseau dans un premier réseau de communication, une demande visant à établir un identificateur ; et
la seconde fonction de réseau étant configurée de manière à déterminer si l'identificateur demandé est disponible pour le service de communication et, dans le cas où l'identificateur demandé n'est pas disponible, à fournir des informations, à la première fonction de réseau, indiquant que la demande est rejetée ;
dans lequel la première fonction de réseau dans le premier réseau de communication souscrit à un identificateur pour l'interfonctionnement de service au moyen d'une notification de disponibilité du second réseau de communication avec la seconde fonction de réseau dans le premier réseau de communication ;
dans lequel la première fonction de réseau dans le premier réseau de communication est une fonction de gestion de session (114) ; et/ou dans lequel la seconde fonction de réseau dans le premier réseau de communication est une fonction de gestion d'accès et de mobilité (112) ; et
dans lequel l'identificateur pour l'interfonctionnement de service avec le second réseau de communication est un identificateur de porteuse de système par paquets évolué pour un interfonctionnement de service avec le réseau central par paquets évolué.
